(19) Europäisches Patentamt
European Patent Office
Office européen des brevets

(11) **EP 2 457 004 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **10739515.4**

(22) Anmeldetag: **20.07.2010**

(51) Int Cl.:
*F16J 15/34* *(2006.01)*

(86) Internationale Anmeldenummer:
**PCT/EP2010/004439**

(87) Internationale Veröffentlichungsnummer:
**WO 2011/009596 (27.01.2011 Gazette 2011/04)**

(54) **GLEITRINGDICHTUNGSANORDNUNG MIT AUSGLEICHSELEMENT**

SLIDE RING SEAL ARRANGEMENT WITH COMPENSATION ELEMENT

SYSTÈME D'ÉTANCHÉITÉ À BAGUE GLISSANTE POURVU D'UN ÉLÉMENT COMPENSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 DE 202009010044 U**

(43) Veröffentlichungstag der Anmeldung:
**30.05.2012 Patentblatt 2012/22**

(73) Patentinhaber: **EagleBurgmann Germany GmbH & Co. KG**
**82515 Wolfratshausen (DE)**

(72) Erfinder: **FESL, Andreas**
**83624 Otterfing (DE)**

(74) Vertreter: **Hoefer & Partner Patentanwälte mbB**
**Pilgersheimer Straße 20**
**81543 München (DE)**

(56) Entgegenhaltungen:
DE-A1- 3 428 744    US-A- 4 768 790
US-A- 5 388 843    US-A- 5 533 739

**Beschreibung**

Die vorliegende Erfindung betrifft eine Gleitringdichtungsanordnung mit einem Ausgleichselement für Welligkeiten, insbesondere bei mit hohem Druck beaufschlagten Gleitringdichtungsanordnungen.

Bei hochbelasteten Gleitringdichtungsanordnungen, wie beispielsweise bei Hochdruckgasdichtungen mit Drücken über 200 x 10$^5$ Pa, ist zur Aufnahme der enormen Axialkräfte ein geteilter Ring an der rotierenden Welle angeordnet. Dieser geteilte Ring ist üblicherweise in einer Wellennut angeordnet und von einem Winkelring umfangen, so dass eine sogenannte "demontierbare Wellenschulter" gebildet wird. Aufgrund der Teilung dieses geteilten Rings ist unter Einwirkung dieser Axialkraft auf den geteilten Ring eine Ebenheit nicht mehr gegeben, so dass sich Verwerfungen bis auf eine Rückanlagefläche des rotierenden Gleitrings sowie auf den Gleitring selbst ergeben können. Dies kann zu Undichtigkeiten in der Gleitringdichtungsanordnung führen. Ferner kann es vorkommen, dass sich aufgrund der enormen Axialkraft der geteilte Ring wegen seiner Teilung ungleichmäßig verformt, so dass sich diese Verformung bis auf die Gleitfläche des stationären Gleitrings durchdrücken kann. Dies führt zu Laufspuren auf der Gleitfläche, welche ebenfalls zu unerwünschten Dichtigkeitsproblemen führen. Um ein derartiges Durchdrücken der Teilung auf die Gleitflächen zu vermeiden, wurde dieses Problem bisher dadurch gelöst, dass man den Dichtspalt zwischen den Gleitflächen vergrößert hat. Dies führt jedoch zu einer unerwünschten höheren Leckagerate.

Die US 4,768,790 offenbart eine Gleitringdichtungsanordnung mit einem rotierenden und stationären Gleitring, welche eine Zentrierung eines axial beweglichen Gleitrings ermöglicht.

Die DE 34 28 744 A1 beschreibt eine Befestigung von ringförmigen Siliziumcarbid-Bauteilen an Metallträgerteilen, wobei ein Graphitring zwischen dem Siliziumcarbid-Bauteil und dem Metallträgerteil festgespannt wird, um Temperaturerhöhungen auszugleichen, ohne die kraftschlüssige Verbindung zu lösen.

Es ist daher Aufgabe der vorliegenden Erfindung, bei einfachem Aufbau und einfacher, kostengünstiger Herstellbarkeit eine Gleitringdichtungsanordnung bereitzustellen, welche die Verwendung eines geteilten Kraftaufnahmerings ermöglicht, ohne dass dadurch Leckageprobleme an der Gleitringdichtungsanordnung auftreten.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 hat demgegenüber den Vorteil, dass ein geteilter Kraftaufnahmering an einem rotierenden Bauteil verwendet werden kann, ohne dass Verwerfungen bzw. Abdrücke der Teilung am Gleitring oder anderen Bauteilen auftreten. Erfindungsgemäß ist hierbei eine Ausgleichsringeinheit vorgesehen, welche einen ersten, einen zweiten und einen dritten Ring umfasst. Der dritte Ring ist dabei zwischen dem ersten und zweiten Ring angeordnet und der erste und zweite Ring weist eine höhere Festigkeit als der dritte Ring auf. Aufgrund der Unterschiede der Festigkeit der drei Ringe der Ausgleichsringeinheit wird eine Verwerfung aufgrund der Verwendung eines geteilten Kraftaufnahmerings am rotierenden Bauteil aufgefangen, indem durch den weicheren dritten Ring (Zwischenring) eventuell auftretende Verwerfungen ausgeglichen werden. D.h., wenn bei sehr hohen Drücken eine große Axialkraft auf den geteilten Ring wirkt, wird der dritte Ring über seine Festigkeitsgrenze hin belastet, so dass der dritte Ring eine plastische Verformung erfährt und somit Verwerfungen ausgleicht. Somit kann auch bei sehr hohen Drücken ein einfach zu montierender geteilter Kraftaufnahmering verwendet werden, da die Ausgleichsringeinheit im Kraftfluss zwischen dem geteilten Kraftaufnahmering und dem Hochdruckbereich angeordnet ist.

Bevorzugt weist der erste Ring eine erste Fläche auf und der zweite Ring eine zweite Fläche auf, wobei die beiden Flächen einander in Axialrichtung zugewandt sind und wobei die beiden Flächen direkt mit dem dritten Ring in Kontakt stehen. Hierdurch wird eine ausreichende Flächenpressung jeweils zwischen dem ersten bzw. zweiten Ring und dem dritten Ring erreicht.

Vorzugsweise ist eine Festigkeit des ersten und zweiten Rings der Ausgleichsringeinheit gleich. Besonders bevorzugt sind dabei der erste und zweite Ring aus dem gleichen Material hergestellt. Hierbei sei angemerkt, dass weiter bevorzugt als Vergleichsgröße eine Zugfestigkeit der drei Ringe zur Ermittlung einer Größe für die Festigkeit verwendet wird.

Besonders bevorzugt weist der erste und der zweite Ring jeweils eine Stufe auf, wobei der dritte Ring in Axialrichtung zwischen den Stufen des ersten und zweiten Rings angeordnet ist. Hierdurch kann ein besonders kompakter Aufbau realisiert werden.

Vorzugsweise sind ein minimaler Innendurchmesser des ersten Rings und ein minimaler Innendurchmesser des zweiten Rings gleich groß. Hierdurch kann einerseits eine einfache Montage der Ausgleichsringeinheit ermöglicht werden und andererseits ergibt sich ein einfacher und kompakter Aufbau.

Besonders bevorzugt ist die Ausgleichsringeinheit derart aufgebaut, dass der erste und zweite Ring lediglich über miteinander in Axialrichtung zugewandten Flächen über den dritten Ring verbunden sind. Somit kann sichergestellt werden, dass keine einander in Axialrichtung zugewandten Flächen des ersten und zweiten Rings direkt miteinander in Kontakt sind, sondern ausschließlich über den dritten Ring miteinander in Kontakt sind. Hierdurch kann der dritte Ring die Ausgleichsfunktion bei hoher Axialbelastung optimal erfüllen.

Um in verschiedenen Betriebszuständen eine gegebenenfalls notwendige Verformung des dritten Rings immer sicherzustellen, ist vorzugsweise eine Flächenpressung zwischen dem ersten und dritten Ring und/oder dem zweiten und dritten Ring größer als eine Streckgrenze des dritten Rings. Gleichzeitig ist die Flächenpressung auch kleiner oder gleich als eine halbe Streckgrenze des ersten oder zweiten Rings. Die Flächenpressung ist dabei zwischen dem dritten Ring und dem ersten bzw. zweiten Ring bei Auftreten der Axialkraft vorhanden.

Weiter bevorzugt ist der als Zwischenring ausgebildete dritte Ring vorzugsweise aus Aluminium oder einem Aluminium enthaltenden Material hergestellt und/oder der erste und zweite Ring sind aus Stahl hergestellt.

Die erfindungsgemäße Gleitringdichtungsanordnung wird besonders bevorzugt bei Hochdruckgasanwendungen eingesetzt, bei denen Drücke von über $200 \times 10^5$ Pa auftreten.

Nachfolgend wird ein Ausführungsbeispiel der Erfindung unter Bezugnahme auf die begleitende Zeichnung im Detail beschrieben. In der Zeichnung ist:

Fig. 1    eine schematische Ansicht einer Gleitringdichtungsanordnung gemäß einem ersten Ausführungsbeispiel der Erfindung, und

Fig. 2    eine vergrößerte Ansicht der in Fig. 1 gezeigten Ausgleichsringeinheit.

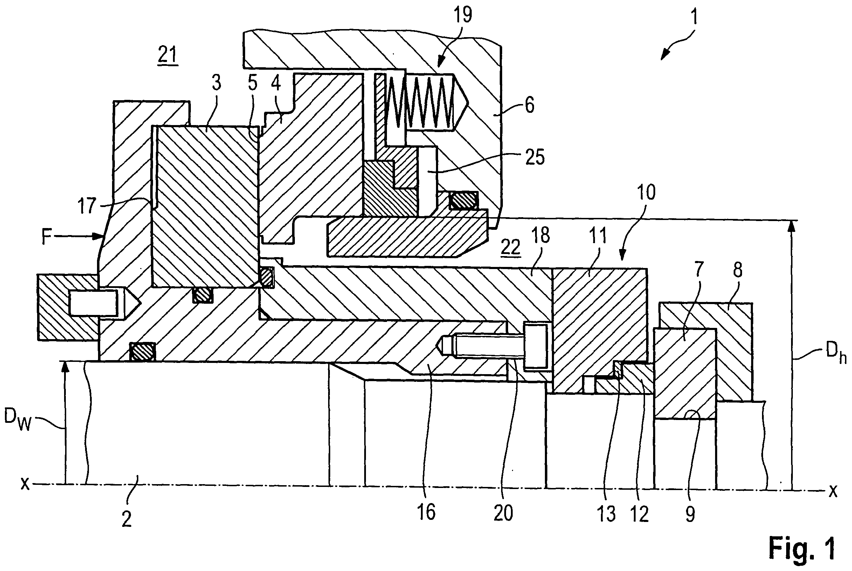

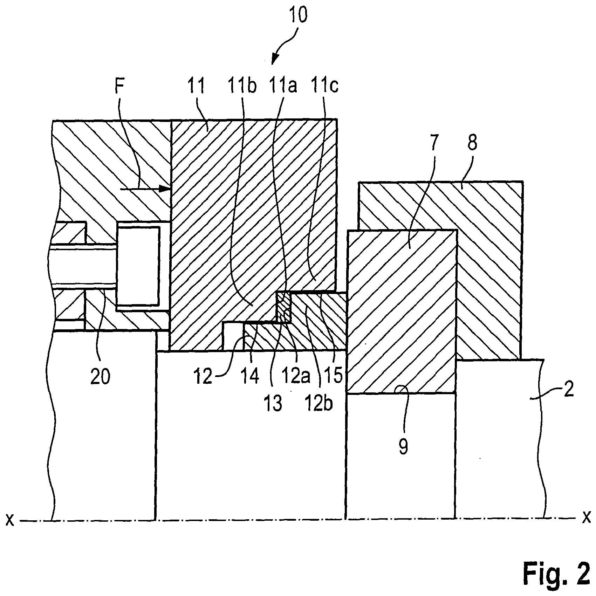

Nachfolgend wird unter Bezugnahme auf die Fig. 1 und 2 eine Gleitringdichtungsanordnung 1 gemäß einem ersten bevorzugten Ausführungsbeispiel der Erfindung im Detail beschrieben.

Fig. 1 zeigt den schematischen Aufbau einer Gleitringdichtungsanordnung 1 gemäß einem bevorzugten Ausführungsbeispiel der Erfindung, welche einen Hochdruckbereich 21 von einem Niederdruckbereich 22 abdichtet. Die Gleitringdichtungsanordnung 1 ist dabei an einer rotierenden Welle 2 angeordnet und umfasst einen rotierenden Gleitring 3 und einen stationären Gleitring 4, welche zwischen sich einen Dichtspalt 5 ausbilden. Der stationäre Gleitring 4 ist mit einem Gehäuse 6 verbunden. Das Bezugszeichen 19 bezeichnet eine Vorspanneinheit zur axialen Vorspannung des stationären Gleitrings 4.

Weiterhin ist ein geteilter Kraftaufnahmering 7 vorgesehen, welcher in einer Wellennut 9 der Welle 2 angeordnet ist. Der geteilte Kraftaufnahmering 7 wird mittels eines Winkelrings 8 umgeben. Der geteilte Kraftaufnahmering 7 ist dabei in Radialrichtung zu einer Mittelachse X-X der Welle 2 geteilt, so dass zwei Halbringteile entstehen, welche durch den Winkelring 8 umfasst werden. Der geteilte Kraftaufnahmering 7 und der Winkelring 8 bilden somit eine demontierbare Wellenschulter, welche ausgelegt ist, Axialkräfte F, die vom Hochdruckbereich 21 über die Gleitringdichtungsanordnung übertragen werden, aufzunehmen. Zur Verdeutlichung der durch diese Anordnung mit geteiltem Ring aufzunehmenden Kräfte ist in Fig. 1 ein Wellendurchmesser $D_w$

und ein hydraulischer Durchmesser $D_h$ eingezeichnet. Der Wellendurchmesser $D_w$ ist dabei der im Bereich der Gleitringdichtung vorhandene Durchmesser der Welle 2 und der hydraulische Durchmesser $D_h$ der an der Gleitringdichtung durch den rotierenden Gleitring 3 und stationären Gleitring 4 abzudichtende Durchmesser. Da bei der in Figur 1 gezeigten Ausgestaltung der Raum 25, in welchem die Vorspanneinheit 19 angeordnet ist, ebenfalls mit dem Hochdruckbereich 21 verbunden ist, ist der hydraulische Durchmesser $D_h$ nicht der maximale Kontaktdurchmesser der Gleitringe, sondern deutlich kleiner. Der geteilte Kraftaufnahmering 7 muss somit eine über eine Ringfläche zwischen dem hydraulischen Durchmesser $D_h$ und dem Wellendurchmesser $D_w$ wirkende Kraft F vom Hochdruckbereich 21 aufnehmen können.

Um die durch die Teilung des geteilten Kraftaufnahmerings 7 möglichen Verwerfungen im Bereich einer metallischen Dichtkante 17 zwischen einer ersten Hülse 16 und dem rotierenden Gleitring 3 und/oder im Bereich der Gleitflächen der Gleitringe 3, 4 zu vermeiden, ist erfindungsgemäß eine Ausgleichsringeinheit 10 vorgesehen. Die erste Hülse 16 ist mit einer zweiten Hülse 18 über mehrere Schraubbolzen 20 miteinander verbunden. Die Ausgleichsringeinheit 10 umfasst einen ersten Ring 11, einen zweiten Ring 12 und einen dritten Ring 13. Der erste Ring 11 und der zweite Ring 12 sind jeweils als Winkelringe mit wenigstens einer Stufe ausgebildet, wobei der erste Ring 11 eine erste Stufe 11b und eine zweite Stufe 11c aufweist (siehe Fig. 2). Der zweite Ring 12 weist lediglich eine einzige Stufe 12b auf. Zwischen dem ersten Ring 11 und dem zweiten Ring 12 ist der dritte Ring 13 angeordnet. Der dritte Ring 13 weist dabei einen rechteckigen Querschnitt auf. Wie insbesondere aus Fig. 2 ersichtlich ist, ist eine in Axialrichtung X-X gerichtete Fläche 11a des ersten Rings 11 in flächigem Kontakt mit einer ersten Axialseite des dritten Rings 13 und eine in Axialrichtung X-X gerichtete Fläche 12a des zweiten Rings 12 ist ebenfalls in flächigem Kontakt mit der anderen Axialseite des dritten Rings 13. Wie aus Fig. 2 ersichtlich ist, sind die beiden Ringe 11 und 12 somit in Axialrichtung X-X nur über den dritten Ring 13 miteinander verbunden.

Hierdurch wird sichergestellt, dass eine über die erste Hülse 16 und die zweite Hülse 18 auf dem ersten Ring 11 übertragene Kraft F ausschließlich über den dritten Ring 13 auf den zweiten Ring 12 übertragen wird. Der zweite Ring 12 befindet sich dann direkt in flächiger Anlage mit dem geteilten Ring 7.

Die Verwendung der erfindungsgemäßen Ausgleichsringeinheit 10 zwischen dem Hochdruckbereich 21 und dem geteilten Ring 7 ermöglicht somit die Verwendung eines geteilten Rings, ohne dass die Gefahr von Verwerfungen an anderen Bauteilen der Gleitringdichtungsanordnung 1 besteht. Bei Auftreten einer zu großen Kraft F erfolgt eine plastische Verformung des dritten Rings 13, welcher eine geringere Festigkeit aufweist, als die beiden anderen Ringe 11 und 12. Durch das Fließen des dritten Rings 13 können somit durch den geteilten Ring 7 eingebrachte, unerwünschte Welligkeiten ausgeglichen werden. Da die zwischen dem ersten Ring 11 und dem zweiten Ring 12 vorhandenen Umfangsspalte 14, 15 nur eine minimale Spaltbreite zwischen 0 bis 0,035 mm aufweisen, kann ferner bei fließendem dritten Ring 13 eine Extrusion über die Umfangsspalte 14, 15 vermieden werden.

Eine Auslegung des dritten Rings 13 erfolgt dabei derart, dass die nachfolgende Gleichung erfüllt ist:

$$S3 < Fl \leq \tfrac{1}{2} \times S1$$

wobei S3 eine Streckgrenze des dritten Rings 13 ist, Fl eine vorhandene Flächenpressung bei einem maximalen Druck im Hochdruckbereich 21, wobei die Flächenpressung zwischen den in Axialrichtung gerichteten Flächen 11 a, 12a und den entsprechenden Ringflächen am dritten Ring 13 auftritt, und S1 eine Streckgrenze des ersten oder zweiten Rings 11, 12 ist. Hinsichtlich der Streckgrenze sei angemerkt, dass bei gleicher Materialwahl für den ersten Ring 11 und den zweiten Ring 12 die Streckgrenzen gleich sind, bei unterschiedlicher Materialwahl für den Wert S1 diejenige Streckgrenze des ersten Rings 11 oder zweiten Rings 12 verwendet wird, welche kleiner ist.

Bevorzugt ist der dritte Ring 13 aus einem relativ weichen Material, wie z.B. einer Aluminiumlegierung, hergestellt und der erste und zweite Ring 11, 12 sind aus einem Stahlmaterial hergestellt. Unter dem Begriff "Streckgrenze" wird ferner erfindungsgemäß der Punkt verstanden, an welchem eine plastische, irreversible Verformung des Materials bei einer Festigkeitsbestimmung auftritt. Die unterschiedlichen Festigkeiten der Ringe 11, 12, 13 der Ausgleichsringeinheit 10 werden vorzugsweise durch Bestimmung der Zugfestigkeit mittels eines Zugversuchs festgelegt. Es ist jedoch auch möglich, dass die Ringe 11, 12, 13 hinsichtlich ihrer Druckfestigkeit festgelegt werden.

Die vorliegende Erfindung kann dabei sowohl bei einfach wirkenden Gleitringdichtungsanordnungen als auch bei doppelt wirkenden Gleitringdichtungsanordnungen eingesetzt werden. Bevorzugt ist dabei die Ausgleichsringeinheit 10 unmittelbar benachbart zum geteilten Ring 7 angeordnet. Dies hat den Vorteil, dass die Verwerfung in einem unmittelbar benachbart zum geteilten Ring 7 angeordneten Bauteil ausgeglichen werden kann, so dass keine weiteren Bauteile der Gleitringdichtungsanordnung verformt werden. Alternativ kann auch ein Zwischenteil verwendet werden.

## Patentansprüche

1. Gleitringdichtungsanordnung zur Abdichtung zwischen einem Hochdruckbereich (21) und einem Niederdruckbereich (22), umfassend:

   - einen mit einem ortsfesten Bauteil (6) verbindbaren stationären Gleitring (4), und
   - einen mit einem rotierenden Bauteil (2) verbindbaren rotierenden Gleitring (3),
   - einen geteilten Kraftaufnahmering (7), welcher am rotierenden Bauteil (2) angeordnet werden kann, und
   - eine Ausgleichsringeinheit (10) mit einem ersten Ring (11), einem zweiten Ring (12) und einem dritten Ring (13),
   - wobei die Ausgleichsringeinheit (10) im Kraftfluss zwischen dem Hochdruckbereich (21) und dem geteilten Kraftaufnahmering (7) angeordnet ist, **dadurch gekennzeichnet, dass** der erste Ring (11) und der zweite Ring (12) eine höhere Festigkeit als der dritte Ring aufweisen.

2. Gleitringdichtungsanordnung nach Anspruch 1, **dadurch gekennzeichnet, dass** der erste und zweite Ring (11, 12) eine erste und eine zweite einander in Axialrichtung X-X zugewandte Fläche (11a, 12a) aufweisen, welche über den dritten Ring (13) miteinander verbunden sind.

3. Gleitringdichtungsanordnung nach einem der vorhergehenden Ansprüche, **dadurch gekennzeichnet, dass** eine Festigkeit des ersten Rings (11) und des zweiten Rings (12) gleich ist.

4. Gleitringdichtungsanordnung nach einem der vorhergehenden Ansprüche, **dadurch gekennzeichnet, dass** der erste Ring (11) eine erste Stufe (11b) aufweist und der zweite Ring (12) eine zweite Stufe (12b) aufweist und der dritte Ring (13) in Axialrichtung (X-X) zwischen der ersten Stufe (11b) und der zweiten Stufe (12b) angeordnet ist.

5. Gleitringdichtungsanordnung nach einem der vorhergehenden Ansprüche, **dadurch gekennzeichnet, dass** der erste Ring (11) ein mehrstufiger Winkelring mit wenigstens zwei Stufen (11b, 11c) ist.

6. Gleitringdichtungsanordnung nach einem der vorhergehenden Ansprüche, **dadurch gekennzeichnet, dass** ein minimaler Innendurchmesser des ersten Rings (11) und des zweiten Rings (12) gleich groß sind.

7. Gleitringdichtungsanordnung einem der vorhergehenden Ansprüche, **dadurch gekennzeichnet, dass** eine Flächenpressung zwischen dem ersten Ring (11) und dem dritten Ring (13) und/oder eine Flächenpressung zwischen dem zweiten Ring (12) und dem dritten Ring (13) größer ist als eine Streckgrenze des dritten Rings (13) und kleiner oder gleich ist als die Hälfte einer Streckgrenze des ersten oder zweiten Rings (11, 12).

**8.** Gleitringdichtungsanordnung nach einem der vorhergehenden Ansprüche, **dadurch gekennzeichnet, dass** der dritte Ring (13) aus Aluminium oder einem Aluminium enthaltenden Material hergestellt ist und/oder dass der erste und zweite Ring aus Stahl hergestellt ist.

**9.** Gleitringdichtungsanordnung nach einem der vorhergehenden Ansprüche, **dadurch gekennzeichnet, dass** die Ausgleichsringeinheit (10) unmittelbar neben dem geteilten Ring (7) angeordnet ist und diesen berührt.

**10.** Gleitringdichtungsanordnung nach einem der vorhergehenden Ansprüche, **dadurch gekennzeichnet, dass** eine Übertragung einer in Axialrichtung (X-X) gerichteten Kraft (F) vom ersten Ring (11) zum zweiten Ring (12) ausschließlich über den dritten Ring (13) erfolgt.

**Claims**

**1.** A mechanical seal assembly for sealing between a high pressure region (21) and a low pressure region (22), comprising:

 - a stationary seal ring (4) connectable to a stationary component (6);
 - a rotating seal ring (3) connectable to a rotating component (2);
 - a divided power absorption ring (7) arrangeable at the rotating component (2); and
 - a compensation ring unit (10) comprising a first ring (11), a second ring (12) and a third ring (13),
 - wherein the compensation ring unit (10) is arranged in the power flow between the high pressure region (21) and the divided power absorption ring (7),
 - **characterized in that** the first ring (11) and the second ring (12) have a higher strength than the third ring (13).

**2.** The mechanical seal assembly of claim 1, **characterized in that** the first and second rings (11, 12) have first and second surfaces (11a, 12a) facing each other in the axial direction (X-X), which surfaces are connected through the third ring (13).

**3.** The mechanical seal assembly of one of the preceding claims, **characterized in that** a strength of the first ring (11) is equal to the strength of the second ring (12).

**4.** The mechanical seal assembly of one of the preceding claims, **characterized in that** the first ring (11) comprises a first step (11b) and the second ring (12) comprises a second step (12b) and the third ring (13) is arranged in the axial direction (X-X) between the first step (11b) and the second step (12b).

**5.** The mechanical seal assembly of one of the preceding claims, **characterized in that** the first ring (11) is a multi-step L-section ring having at least two steps (11b, 11c).

**6.** The mechanical seal assembly of one of the preceding claims, **characterized in that** a minimum inner diameter of the first ring (11) is equal to that of the second ring (12).

**7.** The mechanical seal assembly of one of the preceding claims, **characterized in that** a surface pressure between the first ring (11) and the third ring (13) and/or a surface pressure between the second ring (12) and the third ring (13) is higher than a yield limit of the third ring (13) and smaller than or equal to the half of a yield limit of the first ring (11) or the second ring (12).

**8.** The mechanical seal assembly of one of the preceding claims, **characterized in that** the third ring (13) is made of aluminium or a material containing aluminium and/or that the first and second rings are made of steel.

**9.** The mechanical seal assembly of one of the preceding claims, **characterized in that** the compensation ring unit (10) is arranged directly adjacent to the divided ring (7) and contacts same.

**10.** The mechanical seal assembly of one of the preceding claims, **characterized in that** a transmission of a force (F) directed into the axial direction (X-X) from the first ring (11) to the second ring (12) exclusively occurs through the third ring (13).

**Revendications**

**1.** Système d'étanchéité à bague glissante pour réaliser l'étanchéité entre une zone de haute pression (21) et une zone de basse pression (22), comprenant :

 - une bague glissante stationnaire (4) pouvant être reliée à un composant fixe (6), et
 - une bague glissante rotative (3) pouvant être reliée à un composant rotatif (2),
 - une bague fendue absorbeuse de force (7), qui peut être agencée au niveau du composant rotatif (2), et
 - une unité de bagues de compensation (10) avec une première bague (11), une deuxième bague (12) et une troisième bague (13),
 - dans lequel l'unité de bagues de compensation (10) est agencée dans le flux de force entre la zone de haute pression (21) et la bague fendue absorbeuse de force (7), **caractérisé en ce que** la première bague (11) et la deuxième bague (12) présentent une résistance plus élevée que la troisième bague.

2. Système d'étanchéité à bague glissante selon la revendication 1, **caractérisé en ce que** la première et deuxième bague (11, 12) présentent une première et une deuxième surface (11a, 12a) tournée l'une vers l'autre dans la direction axiale X-X, lesquelles sont reliées l'une à l'autre par le biais de la troisième bague (13).

3. Système d'étanchéité à bague glissante selon l'une quelconque des revendications précédentes, **caractérisé en ce qu'**une résistance de la première bague (11) et de la deuxième bague (12) est identique.

4. Système d'étanchéité à bague glissante selon l'une quelconque des revendications précédentes, **caractérisé en ce que** la première bague (11) présente un premier étage (11b) et la deuxième bague (12) présente un deuxième étage (12b) et la troisième bague (13) est agencée dans la direction axiale (X-X) entre le premier étage (11b) et le deuxième étage (12b).

5. Système d'étanchéité à bague glissante selon l'une quelconque des revendications précédentes, **caractérisé en ce que** la première bague (11) est une bague angulaire à plusieurs étages avec au moins deux étages (11b, 11c).

6. Système d'étanchéité à bague glissante selon l'une quelconque des revendications précédentes, **caractérisé en ce qu'**un diamètre intérieur minimum de la première bague (11) et de la deuxième bague (12) sont de taille identique.

7. Système d'étanchéité à bague glissante selon l'une quelconque des revendications précédentes, **caractérisé en ce qu'**une pression superficielle entre la première bague (11) et la troisième bague (13) et/ou une pression superficielle entre la deuxième bague (12) et la troisième bague (13) est supérieure à une limite d'élasticité de la troisième bague (13) et inférieure ou égale à la moitié d'une limite d'élasticité de la première ou deuxième bague (11, 12).

8. Système d'étanchéité à bague glissante selon l'une quelconque des revendications précédentes, **caractérisé en ce que** la troisième bague (13) est fabriquée en aluminium ou un matériau contenant de l'aluminium et/ou que la première et deuxième bague est fabriquée en acier.

9. Système d'étanchéité à bague glissante selon l'une quelconque des revendications précédentes, **caractérisé en ce que** l'unité de bagues de compensation (10) est agencée directement à côté de la bague fendue (7) et la touche.

10. Système d'étanchéité à bague glissante selon l'une quelconque des revendications précédentes, **caractérisé en ce qu'**une transmission d'une force (F) dirigée dans la direction axiale (X-X) de la première bague (11) à la deuxième bague (12) se fait exclusivement par le biais de la troisième bague (13).

Fig. 1

Fig. 2

**EP 2 457 004 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4768790 A
- DE 3428744 A1